# EUROPÄISCHE PATENTSCHRIFT

(11) **EP 0 356 860 B1**
(45) Veröffentlichungstag und Bekanntmachung des Hinweises auf die Patenterteilung: **13.01.1993**
(21) Anmeldenummer: 89115360.3
(22) Anmeldetag: 19.08.1989
(51) Int. Cl.: C09B 62/085, C09B 62/51, D06P 1/38

(54) **Reaktivfarbstoffe**
Reactive dyes
Colorants réactifs

(30) Priorität: 01.09.1988 DE 3829595
(43) Veröffentlichungstag der Anmeldung: 07.03.1990
(73) Patentinhaber: BAYER AG, 51368 Leverkusen (DE)
(72) Erfinder: Jäger, Horst, Dr., D-5090 Leverkusen 1 (DE)

(56) Entgegenhaltungen:
- EP-A- 0 078 009
- DE-A- 3 204 259
- CHEMICAL ABSTRACTS, Band 95, Nr. 8, August 1981, Seite 73, Zusammenfassung Nr. 63672c, Columbus, Ohio, US; & JP-A-81 37 379 (SUMITOMO CHEMICAL CO. LTD) 11-04-1981

## Beschreibung

Gegenstand der vorliegenden Erfindung sind Azoreaktivfarbstoffe der Formel 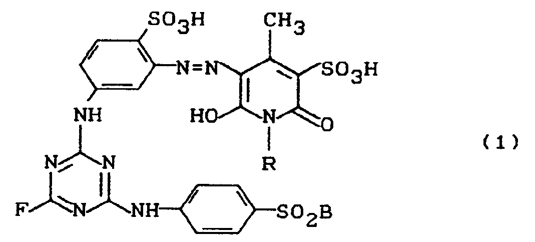
worin
R = unsubstituiertes geradkettiges oder verzweigtes C₁-C₄-Alkyl
B = -CH = CH₂ oder -CH₂-CH₂-Z
Z = Cl, OSO₃H, OCOCH₃, OSO₂CH₃, OPO(OH)₂
Beispiele für R sind:
-CH₃, -C₂H₅, -CH₂-CH₂-CH₃,
-CH(CH₃)₂, -CH₂-CH₂-CH₂-CH₃,

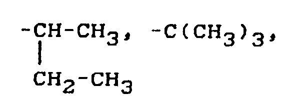

Im Rahmen der Formel (1) sind Farbstoffe bevorzugt, in denen R für CH₃ oder C₂H₅ und B für CH=CH₂ oder CH₂-CH₂-OSO₃H steht.

Aus DE-A-3 204 259 sind bereits Reaktivfarbstoffe mit einem Fluortriazinrest und einer 3˝-β-Thiosulfatoalkylsulfonyl-phenylaminogruppe bekannt, die aber in ihrem färberischem Verhalten noch nicht befriedigen.

Gegenstand der Erfindung sind weiterhin die folgenden Verfahren zur Herstellung von Farbstoffen der Formel (1):
1. Farbstoffe der Formel 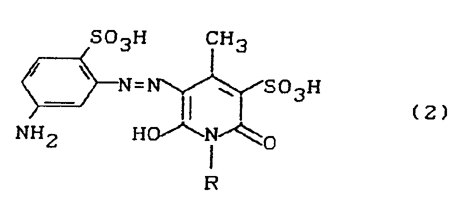 werden zunächst mit 2,4,6-Trifluortriazin unter Abspaltung von Flußsäure kondensiert und der resultierende Difluortriazinfarbstoff mit einem aromatischen Amin der Formel 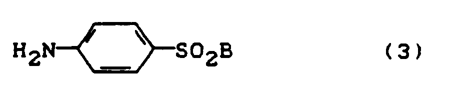 unter Abspaltung von Flußsäure zu einem Farbstoff der Formel (1) umgesetzt.
2. 2,4,6-Trifluortriazin wird mit einem Amin der Formel (3) unter Abspaltung von Flußsäure zu dem Difluorkondensationsprodukt der Formel 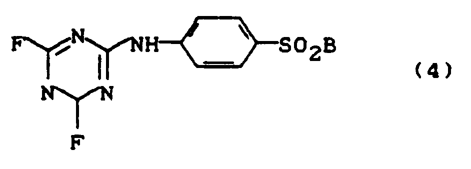 kondensiert und dieses mit einem Farbstoff der Formel (2) zu den erfindungsgemäßen Farbstoffen der Formel (1) unter Abspaltung von Flußsäure umgesetzt.
3. Ein Difluorkondensationsprodukt der Formel (4) wird mit 2,4-Diaminobenzol-1-sulfonsäure unter Abspaltung von Flußsäure kondensiert, die resultierende Verbindung der Formel 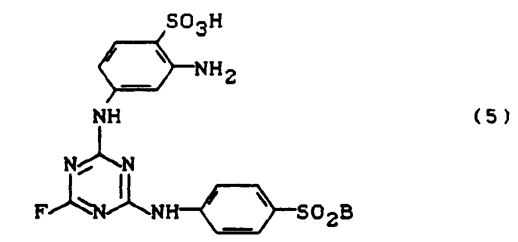 diazotiert und mit einer Kupplungskomponente der Formel 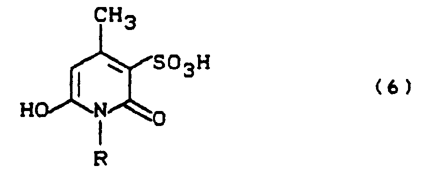 zu einem Farbstoff der Formel (1) gekuppelt.
   Verbindungen der Formel (1) mit B = -SO₂CH₂CH₂OSO₃H können anschließend nach bekannten Verfahren in andere erfindungsgemäße Farbstoffe der Formel (1) übergeführt werden, in denen B für die Vinylgruppe oder eine Ethylgruppe mit einem anderen in ß-Stellung befindlichen alkalisch eliminierbaren Substituenten stehen.

Die Kondensation der Verbindungen der Formel (2) und (3) mit dem 2,4,6-Trifluortriazin erfolgt vorzugsweise in wäßriger Lösung oder Suspension bei niedrigen Temperaturen - vorzugsweise bei 0° - und bei schwach saurem, neutralem bis schwach alkalischem pH. Der freiwerdende Fluorwasserstoff wird durch Zugabe wäßriger Alkalihydroxide, -carbonate oder -bicarbonate abgestumpft. Die Umsetzung der Difluorverbindungen mit den ensprechenden Reaktionspartnern erfolgt ebenfalls vorzugsweise in wäßriger Lösung oder Suspension bei niedriger Temperatur - vorzugsweise bei 0° bis 20° - und bei schwach saurem bis schwach alkalischem pH.

Der bei der Kondensation von (2) und (3) mit Trifluortriazin freiwerdende Fluorwasserstoff wird ganz generell, bevorzugt durch Li-Basen, beispielsweise Lithiumhydroxid, neutralisiert.

Die Farbstoffe der Formel (2) erhält man durch Kupplung von diazotierter 4-N-Acylamino-2-amino-benzol-1-sulfonsäure mit den Kupplungskomponenten der Formel (6) in schwach sauren bis schwach alkalischen wäßrigen Medium. Der Acylrest (vorzugsweise der Rest CH₃CO-) wird anschließend durch Erhitzen mit Säuren abgespalten.

Die Kupplung der diazotierten Amine der Formel (5) mit den Kupplungskomponenten der Formel (6) erfolgt in wäßriger Phase bei schwach saurem bis neutralem pH.

Geeignete Beispiele für Amine (3) sind: 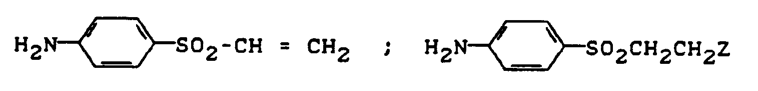
mit
Z = OSO₃H, OPO₃H₂, SSO₃H, Cl oder OCOCH₃

Geeignete Beispiele für Kupplungskomponenten (6) sind:

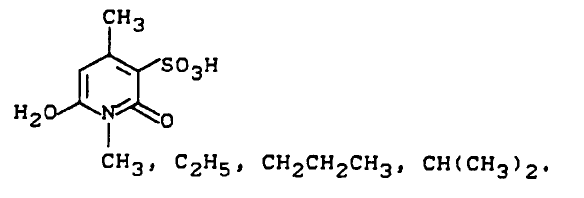

Die neuen Farbstoffe geben auf Cellulose- sowie natürlichen synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um °C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Indication Chart (Indicator Numbers).

### Beispiel 1

28,1 g 4-Aminophenyl-β-sulfatoethylsulfon werden in 300 ml Wasser bei pH 5-5,5 gelöst. Dann wirft man 200 g Eis ein und tropft in 20 Minuten 9,1 ml Trifluortriazin ein, wobei durch gleichzeitige Zugabe von verdünnter Sodalösung ein pH zwischen 5 und 6 eingehalten wird.

Nach einer Nachrührzeit von 5 Minuten ist kein diazotierbares Amin mehr nachweisbar. In diese Acylierung läßt man dann eine neutrale Lösung von 18,8 g Metaminsäure in 100 ml Wasser einlaufen, wobei mit verdünnter Sodalösung ein pH von 5-6 eingehalten wird. Man kondensiert zunächst 30 Minuten bei 0-5° und läßt dann die Temperatur auf 10-15° ansteigen. Das Kondensationsprodukt der Formel 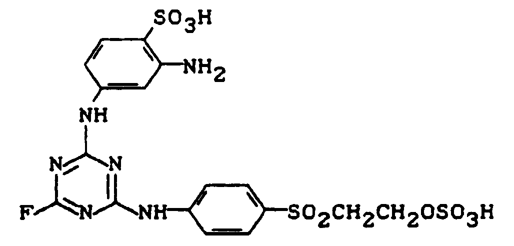
liegt in Lösung vor.

Vor dem Diazotieren erniedrigt man die Temperatur durch Einwerfen von Eis auf 5° und fügt dann soviel konzentrierte Salzsäure hinzu, daß der pH unter 1,5 liegt. Anschließend wird durch Zutropfen von 70 ml 10 Volumen-%iger Natriumnitritlösung diazotiert. Man rührt bei 5° 30 Minuten nach und entfernt den Überschuß an Nitrit mit Amidosulfonsäure. Die erhaltene Suspension der Diazotierung wird in eine Vorlage aus 23,3 g 1-N-Ethyl-2-hydroxy-4-methyl-5-sulfo-pyridon-6 und 100 ml Wasser gegeben, wobei man durch gleichzeitiges Einstreuen von Natriumhydrogencarbonat einen pH von 6-7 einhält. Nach beendeter Kupplung wird der Farbstoff durch Zugabe von 25 Volumen-% Kaliumchlorid ausgesalzen. Nach dem Absaugen und Trocknen im Vakuumtrockenschrank bei 60-70° und Mahlen erhält man ein gelbes Farbstoffpulver, das sich leicht in Wasser mit zitronengelber Farbe löst. Der Farbstoff, der der Formel 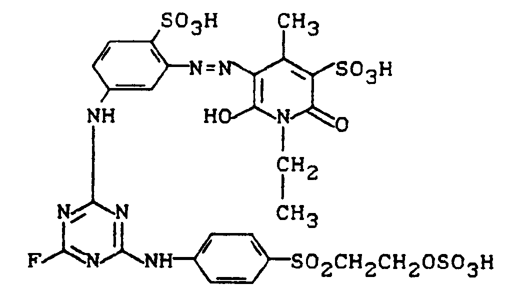
entspricht, färbt Baumwolle nach einem der für Reaktivfarbstoffe üblichen Verfahren in einem kräftigen grünstichigen Gelb (Farbkennzahl 1).

Einen Farbstoff mit ähnlichen Eigenschaften erhält man, wenn man anstelle von 1-N-Ethyl-2-hydroxy-4-methyl-5-sulfo-pyridon-6 äquimolare Mengen der entsprechenden 1-N-Methyl-Verbindung eingesetzt.

### Beispiel 2

43,2 g des Farbstoffes der Formel 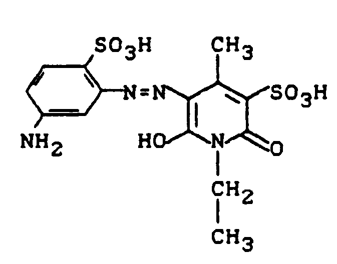
(erhältlich durch Diazotieren von 2-Amino-4-acetylaminobenzolsulfonsäure-1 und Kupplung auf 1-N-Ethyl-2-hydroxy-4-methyl-5-sulfo-pyridon-6 im neutralen Bereich und anschließender Abspaltung der Acetylgruppe durch Erhitzen mit Säuren) werden in 400 ml Wasser neutral gelöst. Diese Lösung gibt man zu dem nach den Angaben von Beispiel 1 erhaltenen Acylierungsprodukt der Formel

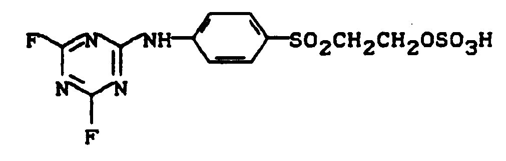

Man führt die Kondensation im pH-Bereich von 5,5-6,5 durch, wobei man die Temperatur auf 20° ansteigen läßt. Nach dem Aufarbeiten, das in der gleichen Weise wie bei Beispiel 1 erfolgt, erhält man einen Farbstoff, der in der Struktur mit dem Beispiel 1 identisch ist.

## Patentansprüche

1. Farbstoffe der Formel 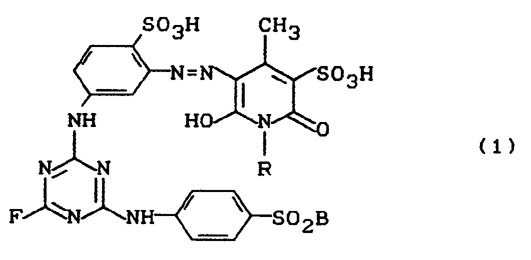 worin
R = unsubstituiertes geradkettiges oder verzweigtes C₁-C₄-Alkyl
B = -CH = CH₂ oder -CH₂-CH₂-Z
Z = Cl, OSO₃H, OCOCH₃, OSO₂CH₃, OPO(OH)₂.

2. Farbstoffe des Anspruchs 1 mit R = CH₃ oder C₂H₅ und B = -CH=CH₂ oder -CH₂CH₂OSO₃H.

3. Verwendung der Farbstoffe der Ansprüche 1-2 zum Färben und Bedrucken von hydroxlgruppen- oder amidgruppenhaltigen Materialien.

## Claims

1. Dyestuffs of the formula 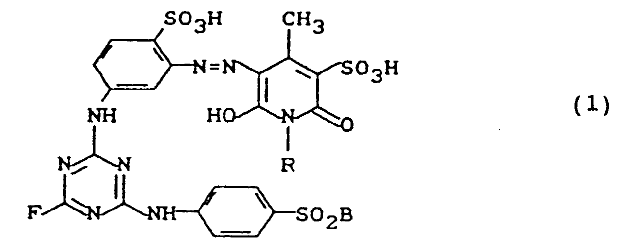 in which
R is unsubstituted straight-chain or branched C₁-C₄-alkyl
B is -CH=CH₂ or -CH₂-CH₂-Z
Z is Cl, OSO₃H, OCOCH₃, OSO₂CH₃ or OPO(OH)₂.

2. Dyestuffs of Claim 1 where R is CH₃ or C₂H₅ and B is -CH=CH₂ or -CH₂CH₂OSO₃H.

3. Use of the dyestuffs of Claims 1-2 for the dyeing and printing of hydroxyl- or amido-containing materials.

## Revendications

1. Colorants de formule 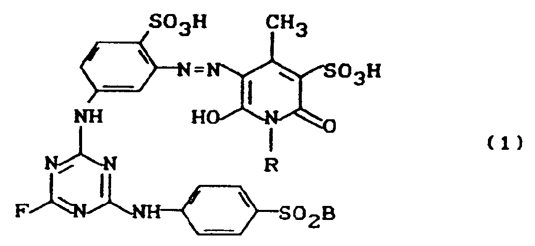 dans laquelle
R est un groupe alkyle en C₁ à C₄ à chaîne droite ou ramifiée, non substitué
B représente -CH = CH₂ ou -CH₂-CH₂-Z
Z représente Cl, OSO₃H, OCOCH₃, OSO₂CH₃, OPO(OH)₂.

2. Colorants suivant la revendication 1, dans lesquels R représente CH₃ ou C₂H₅ et B représente -CH=CH₂ ou -CH₂CH₂OSO₃H.

3. Utilisation des colorants suivant les revendications 1 et 2 pour la teinture et l'impression de matières portant des groupes hydroxyle ou des groupes amide.
